# EUROPEAN PATENT SPECIFICATION

(11) **EP 4 087 020 B1**
(45) Date of publication and mention of the grant of the patent: **08.04.2026**
(21) Application number: 21822831.0
(22) Date of filing: 01.06.2021
(51) Int. Cl.: H01M 10/6556, H01M 10/6567, H01M 10/6566, H01M 10/6562, H01M 10/6551, H01M 10/613, H01M 50/20, H01M 10/625

(54) **BATTERY PACK INCLUDING BATTERY MODULES STACKED IN MULTIPLE STAGES**
BATTERIEPACK MIT IN MEHREREN SCHICHTEN GESTAPELTEN BATTERIEMODULEN
BLOC-BATTERIE COMPRENANT DES MODULES DE BATTERIE EMPILÉS EN PLUSIEURS ÉTAGES

(30) Priority: 08.06.2020 KR 20200069078
(43) Date of publication of application: 09.11.2022
(73) Proprietor: LG Energy Solution, Ltd., Seoul 07335 (KR)
(72) Inventor: HONG, Soon Chang, Daejeon 34122 (KR); YOO, Hyong Seok, Daejeon 34122 (KR); RHIM, So Eun, Daejeon 34122 (KR); KIM, Dong Hyun, Daejeon 34122 (KR)
(74) Representative: Plasseraud IP
(86) International application number: PCT/KR2021/006795
(87) International publication number: WO 2021/251670

(56) References cited:
- EP-A1- 2 474 055
- WO-A1-2018/188995
- KR-A- 20170 057 465
- KR-A- 20170 059 178
- KR-A- 20170 085 681
- KR-A- 20190 032 843
- KR-A- 20190 131 415
- US-A1- 2018 145 290

## Description

### [Technical Field]

The present invention relates to a battery pack including battery modules stacked in multiple stages, and more particularly to a battery pack including battery modules stacked in multiple stages configured such that a plurality of cooling units configured to discharge heat generated from the battery modules stacked in multiple stages is provided, the cooling units are protected, and coolant leakage is minimized.

### [Background Art]

With recent development of alternative energies due to air pollution and energy depletion caused as the result of use of fossil fuels, demand for secondary batteries capable of storing electrical energy that is produced has increased. The secondary batteries, which are being capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

In the battery module or the battery pack, a plurality of battery cells is connected to each other in series or in parallel in order to increase capacity and output of the battery module or the battery pack. In the case in which a plurality of battery cells is used in a state of being connected to each other, a problem, such as overload, may occur. In particular, for the battery pack, battery modules, each of which includes a plurality of battery cells, are located in a case so as to be stacked in multiple stages. As a result, there is a problem in that temperature in the battery pack increases due to overload, whereby abnormality of the battery is amplified. In order to solve this problem, it is necessary for a general battery pack to have a cooling unit capable of lowering the temperature of the battery, whereby safety of the battery is improved, space efficiency of the battery is improved, and energy density of the battery is improved.

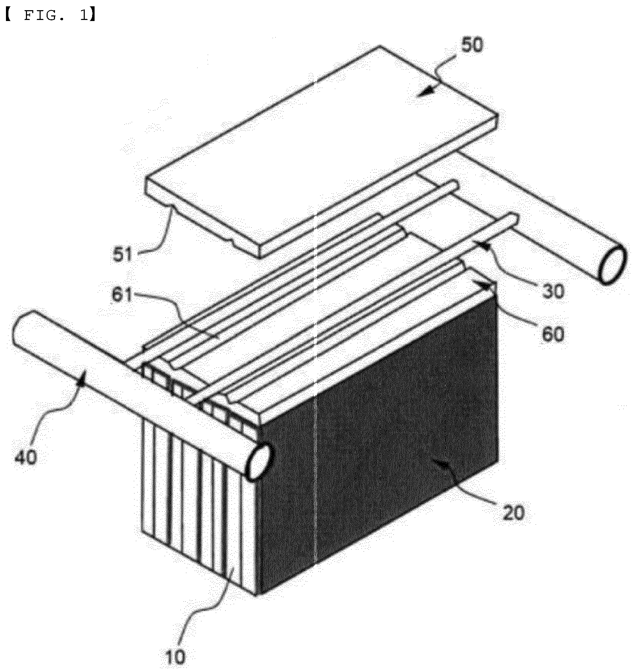

FIG. 1 is a perspective view of a conventional battery module. As shown in FIG. 1, the conventional battery module includes a module case 20 configured to receive battery cells 10 therein, a cooling channel 30 located at the upper surface of the battery module, a coolant transport pipe 40 configured to supply and collect a coolant to and from the cooling channel 30, and an upper protection cover 50 and a lower protection cover 60 configured to wrap the cooling channel 30 in order to protect the cooling channel. Here, although not shown, another battery module is loaded on the upper surface of the upper protection cover 50 such that the battery modules are stacked in multiple stages, whereby efficiency of cooling of the battery modules is improved and leakage of the coolant in the cooling channel 30 through the upper protection cover 50 and the lower protection cover 60 is prevented.

In the conventional art, as described above, a heat exchange process between the battery module and the coolant in the cooling channel 30 is improved, whereby cooling performance is improved, and grooves 51 and 61 are provided to receive the cooling channel 30, whereby space utilization is improved. Since the coolant transport pipe 40 configured to supply and collect the coolant to and from the cooling channel 30 is exposed to the outside, however, there is a problem in that the volume of the battery pack is large.

In addition, since the coolant transport pipe 40, in which the coolant flows, is exposed to the outside, the coolant may leak due to damage to the coolant transport pipe when external impact is applied thereto, which may lead to a serious accident.

### (Prior Art Documents)

Examples of background art can be found in JP2016-029660, EP2474055A1, WO2018188995A1, US2018/145290A1, KR20170085681A, KR20190131415A, KR20170057465A, KR20170059178A, and KR20190032843A.

### [Disclosure]

### [Technical Problem]

The present invention has been made in view of the above problems, and it is an object of the present invention to provide a battery pack configured such that heat generated from battery modules stacked in multiple stages is effectively discharged, whereby safety of the battery pack is improved.

It is another object of the present invention to provide a battery pack configured such that leakage of a coolant from the battery pack is minimized.

It is another object of the present invention to provide a battery pack configured such that an increase in volume of the battery pack due to various parts configured to perform cooling is inhibited.

It is a further object of the present invention to provide a battery pack configured such that leakage of a coolant is restricted even in the case in which a frame is damaged due to external impact.

### [Technical Solution]

In order to accomplish the above objects, a battery pack as defined in claim 1 and preferred embodiments in dependent claims 2-7 is provided, which includes at least one battery module (100) and a pack case (200) configured to receive the battery module (100) therein, wherein the battery module (100) includes a first battery module (110) and a second battery module (120) vertically stacked above the first battery module (110), a first cooling unit (300) configured to discharge heat generated from the first battery module (110) is located between an inside upper surface of the bottom surface of the pack case (200) and the first battery module (110), and a second cooling unit (400) configured to discharge heat generated from the second battery module (120) is provided between the first battery module (110) and the second battery module (120).

The pack case (200) includes a front frame (210), a rear frame (220), and a pair of side frames (230) configured to connect the front frame (210) and the rear frame (220) to each other, and each of the pair of side frames (230) is provided with a coolant circulation channel (231) configured to supply and collect a coolant to and from the first cooling unit (300).

The front frame (210) may be provided with a pair of a coolant introduction port (211) and a coolant discharge port (212) spaced apart from each other by a predetermined distance, and a coolant transfer pipe (213) configured to communicate with the coolant circulation channel (231) may be connected to each of the coolant introduction port (211) and the coolant discharge port (212).

An air circulation channel (232) may be located adjacent the coolant circulation channel (231) of the side frame (230) so as to be parallel to the coolant circulation channel (231).

The air circulation channel (232) may be provided with at least one incision portion (233) configured to allow external air to pass therethrough.

The first cooling unit (300) may include a pair of a first lower plate (310') and a first upper plate (310") configured to provide a space in which a coolant is circulated and a first heat sink (310) including a first coolant inlet (311) and a first coolant outlet (312) detachably coupled to the coolant circulation channel (231), and a bottom surface of the side frame (230) may be provided with fastening holes (234) connected to the first coolant inlet (311) and the first coolant outlet (312).

In the battery pack according to the present invention, the second cooling unit (400) includes a second heat sink (410), a lower protection cover (420) located under the second heat sink (410), an upper protection cover (430) located on the second heat sink (410), and a coupling band (440) located along edges of the lower protection cover (420) and the upper protection cover (430) in a state of receiving the second heat sink (410).

The coupling band (440) may be formed by CMT welding.

In a battery pack not according to the present invention, the second cooling unit may include a sealing gasket may be between edges of the lower protection cover and the upper protection cover.

The second heat sink (410) may include a second heat sink body (411), a second L-shaped coolant inlet (412) configured to supply a second coolant to the second heat sink body (411), and a second L-shaped coolant outlet (413) configured to discharge the second coolant, and the lower protection cover (420) may be provided with a pair of bent pipes (422) configured to receive the second coolant inlet (412) and the second coolant outlet (413), respectively.

In addition, the present invention provides a device as defined in claim 8.

### [Advantageous Effects]

As is apparent from the above description, a battery pack including battery modules stacked in multiple stages according to the present invention has a merit in that a cooling unit is also provided between the vertically stacked battery modules, whereby cooling efficiency is improved.

In addition, the battery pack including the battery modules stacked in multiple stages according to the present invention has an advantage in that an upper protection cover and a lower protection cover wrap a second heat sink in order to protect the second heat sink, whereby impact resistance is high and coolant leakage is minimized.

In addition, the battery pack including the battery modules stacked in multiple stages according to the present invention has a merit in that a coolant circulation channel is provided in a side frame, whereby it is possible to minimize leakage of a coolant even in the case in which external impact is applied thereto.

Furthermore, the battery pack including the battery modules stacked in multiple stages according to the present invention has an advantage in that an air circulation channel is further provided in the side frame along the coolant circulation channel, whereby it is possible to improve cooling efficiency and to reduce the overall weight of the battery pack.

### [Description of Drawings]

FIG. 1 is a perspective view of a conventional battery module.
FIG. 2 is a perspective view of a battery pack according to a first preferred embodiment of the present invention.
FIG. 3 is an exploded perspective view of the battery pack according to the first preferred embodiment of the present invention.
FIG. 4 is a sectional view taken along line A-A' of FIG. 2.
FIG. 5 is a perspective view showing a side frame according to a first preferred embodiment of the present invention.
FIG. 6 is a perspective view illustrating coupling of the side frame according to the first preferred embodiment of the present invention.
FIG. 7 is an exploded perspective view illustrating a battery module and a first cooling unit of FIG. 3.
FIG. 8 is an exploded perspective view illustrating the first cooling unit of FIG. 7.
FIG. 9 is an exploded perspective view of a second cooling unit according to a first preferred embodiment of the present invention.
FIG. 10 is an exploded perspective view of a second cooling unit of a second preferred embodiment not according to the present invention.
FIG. 11 is a partial perspective view illustrating a battery pack according to a third preferred embodiment not according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

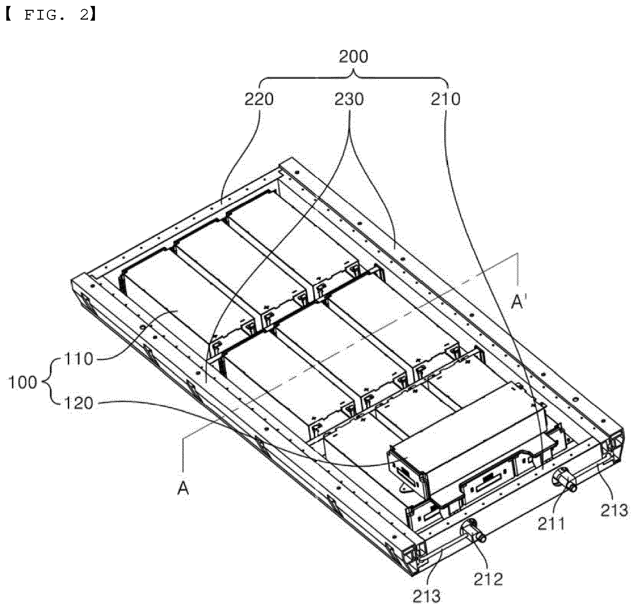

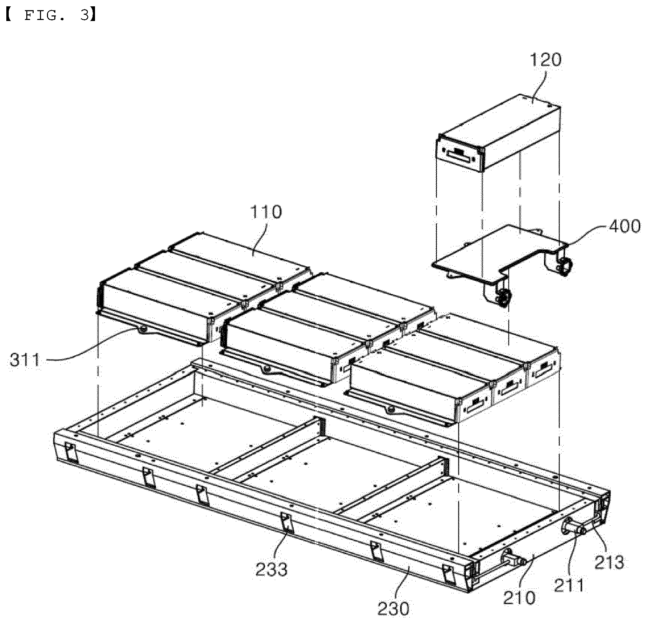

FIG. 2 is a perspective view of a battery pack according to a first preferred embodiment of the present invention, and FIG. 3 is an exploded perspective view of the battery pack according to the first preferred embodiment of the present invention.

Referring to FIGS. 2 and 3, the battery pack according to the present invention includes a battery module 100, a pack case 200 configured to receive the battery module 100 therein, and a first cooling unit 300 and a second cooling unit 400 configured to remove heat generated from the battery module 100.

When describing the battery module 100, first, the battery module 100 includes a plurality of first battery modules 110 seated on the bottom surface of the pack case 200 and a second battery module 120 located above the first battery modules 110.

Here, each of the first battery module 110 and the second battery module 120 may include at least one unit cell, and the unit cell may include an electrode assembly and a cell case configured to receive the electrode assembly therein. The electrode assembly may be a jelly-roll type electrode assembly, which is configured to have a structure in which a long sheet type positive electrode and a long sheet type negative electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other. However, the present invention is not limited thereto. It is preferable for the electrode assembly according to the present invention to be a stacked and folded type electrode assembly or a laminated and stacked type electrode assembly, which has lowest physical stress when a curved module is formed.

The electrode assembly is received in the cell case. The cell case is generally configured to have a laminate sheet structure including an inner layer, a metal layer, and an outer layer. The inner layer is disposed in direct contact with the electrode assembly, and therefore the inner layer must exhibit high insulation properties and high resistance to an electrolytic solution. In addition, the inner layer must exhibit high sealability in order to hermetically seal the cell case from the outside, i.e. a thermally-bonded sealed portion between inner layers must exhibit excellent thermal bonding strength. The inner layer may be made of a material selected from among a polyolefinbased resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanicalphysical properties, such as tensile strength, rigidity, surface hardness, and resistance to impact strength, and excellent chemical resistance, is the most preferably used.

The metal layer, which is disposed so as to abut the inner layer, corresponds to a barrier layer configured to prevent moisture or various kinds of gas from permeating into the battery from the outside. An aluminum thin film, which is light and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air transmission such that the outer layer exhibits high heat resistance and chemical resistance while protecting the electrode assembly. As an example, the outer layer may be made of nylon or polyethylene terephthalate. However, the present invention is not limited thereto.

Although a total of 10 battery modules 100, i.e. nine first battery modules 110 and one first battery module 110, is shown as being received in the figures, which is merely an illustration, the number of battery modules may be changed.

The pack case 200, which is configured to receive the battery modules 100 therein and to protect the battery modules 100 from external impact, includes a front frame 210, a rear frame 220, and a pair of side frames 230.

Specifically, a pair of a coolant introduction port 211 and a coolant discharge port 212 is fixed to the front frame 210 in a state of being spaced apart from each other by a predetermined distance, and a pair of coolant transfer pipes 213 is connected to these ports so as to extend toward the side frames 230.

Consequently, a coolant, cooled to a predetermined temperature, from the outside is injected into the coolant introduction port 211 and then flows along the coolant transfer pipe 213 connected to the coolant introduction port 211. The coolant, heated to a predetermined temperature as a result of absorbing heat of the first battery modules 110, is discharged through the other coolant transfer pipe 213 and the coolant discharge port 212. After being cooled to a predetermined temperature, the coolant is resupplied.

In addition, some of the coolant introduced into the coolant introduction port 211 moves to the second cooling unit 400, absorbs heat generated from the second battery module 120, is discharged via the coolant discharge port 212, is cooled, and is resupplied.

Here, the pair of the coolant transfer pipes 213 supplies and collects the coolant to and from the side cases 230 and a second heat sink 410. A detailed description related thereto will be given below.

Meanwhile, a plurality of partition walls may be provided on the bottom surface of the pack case 200 such that the battery modules 100 are spaced apart from each other by a predetermined distance.

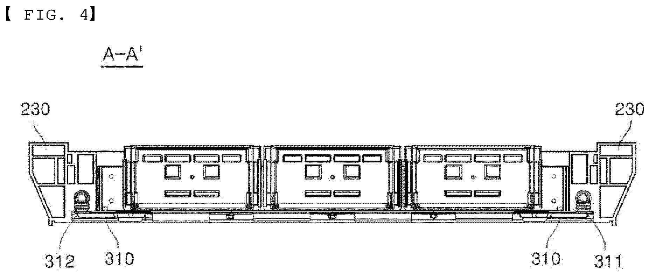

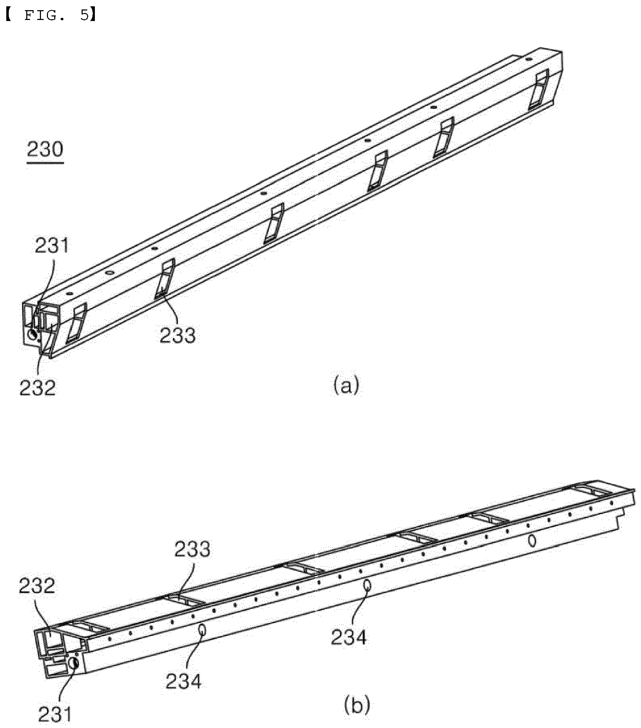

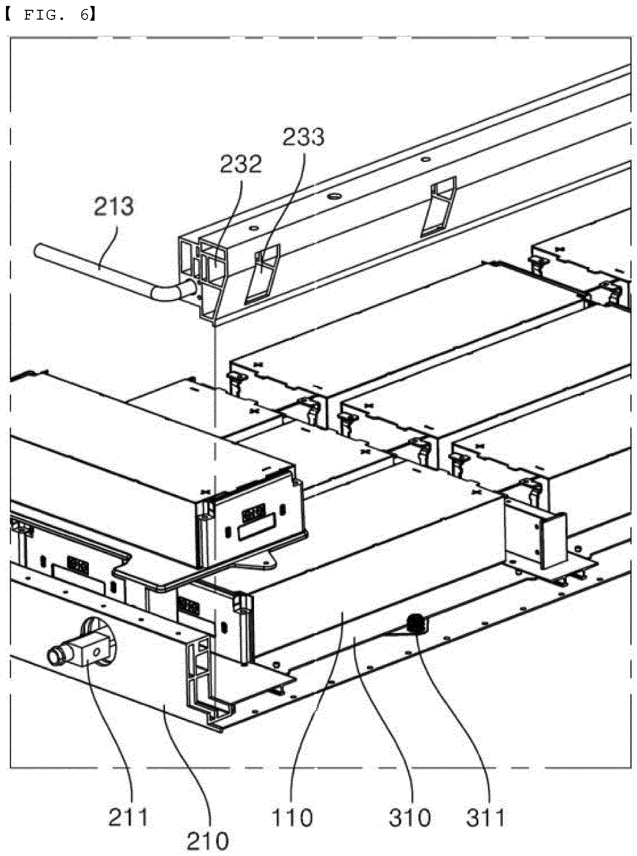

FIG. 4 is a sectional view taken along line A-A' of FIG. 2, FIG. 5 is a perspective view showing a side frame according to a first preferred embodiment of the present invention, and FIG. 6 is a perspective view illustrating coupling of the side frame according to the first preferred embodiment of the present invention.

Referring to FIGS. 4 to 6, the pair of side frames 230 according to the present invention is spaced apart from each other by a predetermined distance in order to connect the front frame 210 and the rear frame 220 to each other, and each side frame 230 is provided with a coolant circulation channel 231 connected to a corresponding one of the coolant transfer pipes 213, an air circulation channel 232, an incision portion 233, and a fastening hole 234.

First, the coolant circulation channel 231 connected to one side of the coolant transfer pipe 213 is configured to have a shape extending through the side frame 230 in a longitudinal direction thereof. Consequently, a cool coolant to be supplied to a first heat sink 310 flows in the coolant circulation channel 231 connected to the coolant transfer pipe 213 communicating with the coolant introduction port 211, and a coolant heated to a predetermined temperature as a result of heat absorption moves in the coolant circulation channel 231 connected to the coolant transfer pipe 213 communicating with the coolant discharge port 212.

Conventionally, the coolant circulation channel is separately manufactured and is then connected to the side surface or the bottom surface of the pack case, and therefore the coolant circulation channel may be easily damaged due to external impact. Furthermore, there is a problem in that a coolant that leaks from the coolant circulation channel as a result of damage to the coolant circulation channel may cause a new event.

In contrast, the coolant circulation channel 231 according to the present invention is provided in the side frame 230, and therefore there are advantages in that a danger of damage to the coolant circulation channel due to external impact may be minimized and the overall volume of the battery pack may be reduced.

The air circulation channel 232 is located in the state in which a separation wall is disposed between the air circulation channel and the coolant circulation channel 231 such that no coolant leaks into the air circulation channel. At this time, the air circulation channel extends long parallel to the coolant circulation channel 231 such that the coolant moving in the coolant circulation channel 231 is cooled as naturally as possible.

Furthermore, the air circulation channel 232 is provided with at least one incision portion 233, through which external air may pass, whereby more efficient cooling is possible. That is, since the air circulation channel 232 is further provided in the side frame 230 along the coolant circulation channel 231, it is possible to rapidly cool the battery pack and to reduce the overall weight of the battery pack.

Meanwhile, each of the pair of side frames 230 is provided in the bottom surface thereof with at least one fastening hole 234 configured to communicate with the coolant circulation channel 231, more specifically fastening holes 234 equal in number to first coolant inlets 311 or first coolant outlets 312 of the first heat sink 310 located under the battery modules 100.

For example, for the side frame 230 sequentially connected to the coolant introduction port 211 and the coolant transfer pipe 213, the fastening holes 234 formed in the bottom surface of the side frame 230 are respectively fixed to the first coolant inlets 311 of the first heat sink 310 by fastening. Consequently, a coolant introduced into the coolant introduction port 211 sequentially moves along the coolant transfer pipe 213 and the coolant circulation channel 231 and is then supplied to the first coolant inlets 311 of the first heat sink 310.

In the same manner, the other side frame 230 connected to the first coolant discharge port 212 and the coolant transfer pipe 213 has the same coupling structure as described above, and a heated coolant is circulated in the order of the first coolant outlets 312 of the first heat sink 310, the coolant transfer pipe 213, and the coolant discharge port 212.

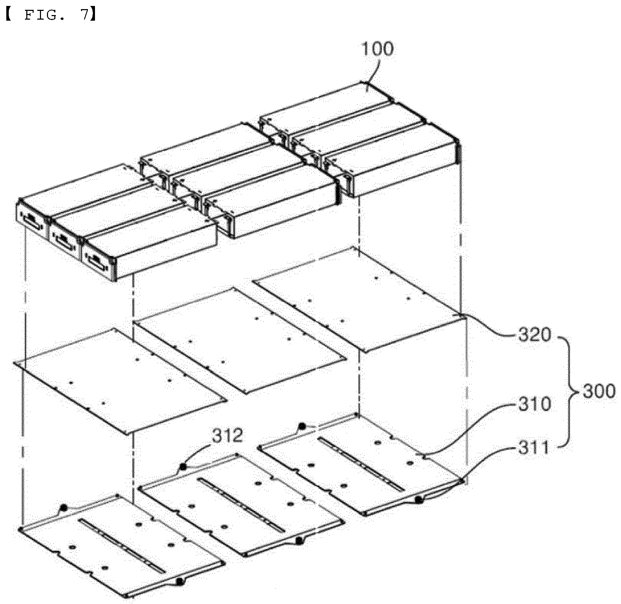

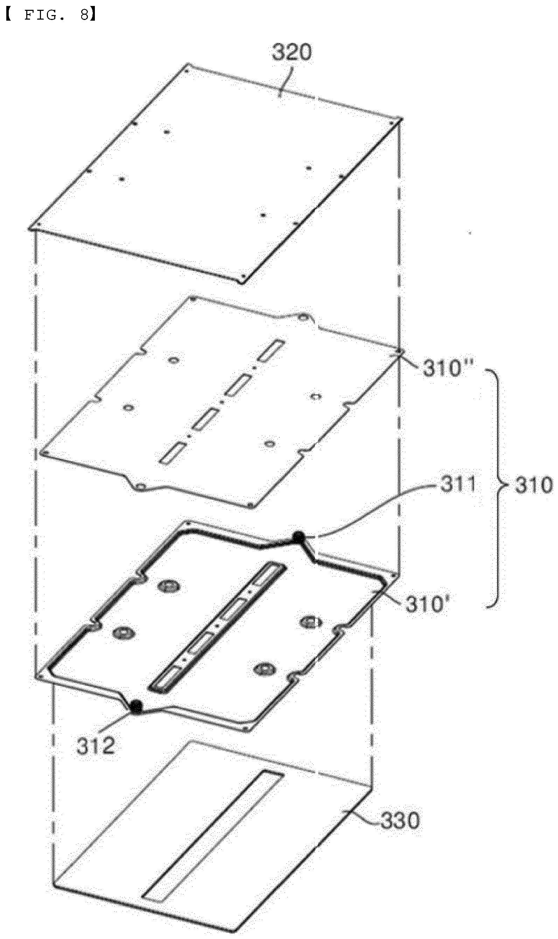

FIG. 7 is an exploded perspective view illustrating the battery module and the first cooling unit of FIG. 3, and FIG. 8 is an exploded perspective view illustrating the first cooling unit of FIG. 7.

The first cooling unit 300, which is configured to remove heat generated from the first battery modules 110, is located between the battery module 100 and an inside upper surface of the pack case 200, and includes a first heat sink 310 and a first heat dissipation plate 320 located between the first heat sink 310 and the pack case 200.

Specifically, the first heat sink 310 is constituted by a pair of a first lower plate 310' and a first upper plate 310" in order to provide a space in which a coolant is circulated.

Here, the first lower plate 310' is provided with a pair of a first coolant inlet 311 and a first coolant outlet 312 facing each other, to which the fastening holes 234 formed in the bottom surfaces of the side frames 230 are coupled, as previously described.

Meanwhile, the first heat dissipation plate 320 is located between the first heat sink 310 and the first battery modules 110, and a second heat dissipation plate 330 is located under the first heat sink 310, whereby heat generated from the first battery modules 100 is transmitted to the first heat sink 310.

Particularly, since the first heat dissipation plate 320 and the second heat dissipation plate 330 are located at the upper surface and the lower surface of the first heat sink 310, respectively, so as to wrap the first heat sink 310 once more, there is an advantage in that, even in the case in which coolant leakage occurs, it is possible to prevent the coolant from permeating into the battery pack.

It is preferable for each of the first heat sink 310, the first heat dissipation plate 320, and the second heat dissipation plate 330 to be made of a material that exhibits high thermal conductivity, such as aluminum.

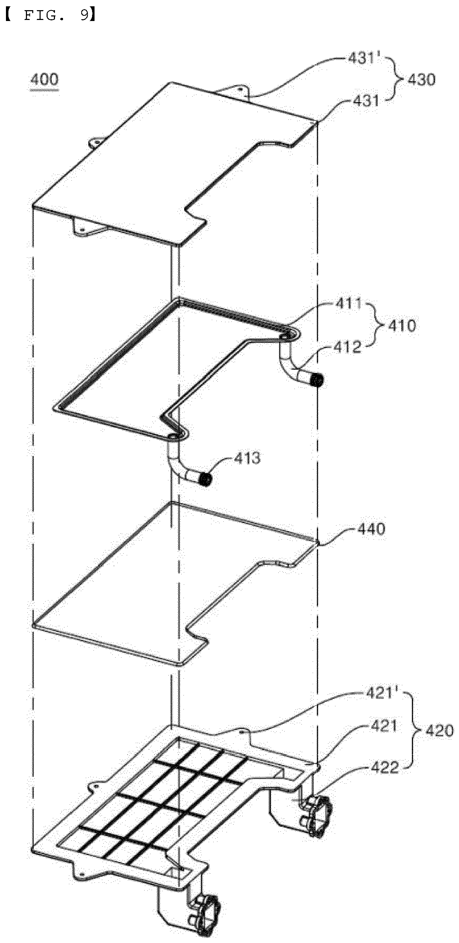

FIG. 9 is an exploded perspective view of a second cooling unit according to a first preferred embodiment of the present invention.

The second cooling unit 400 is located between the upper surfaces of the first battery modules 110 and the lower surface of the second battery module 120, and includes a second heat sink 410, a lower protection cover 420, an upper protection cover 430, and a coupling band 440.

Specifically, the second heat sink 410 includes a second heat sink body 411 configured to provide a space in which a coolant is circulated, a second coolant inlet 412, and a second coolant outlet 413.

Here, the second coolant inlet 412 and the second coolant outlet 413 are located at one side of the second heat sink body 411 so as to be spaced apart from each other by a predetermined distance, and each thereof has an appropriately L-shape. As previously described, the second coolant inlet 412 is coupled to the coolant introduction port 211, and the second coolant outlet 413 is coupled to the coolant discharge port 212.

The lower protection cover 420 includes a lower protection cover body 421 and an L-shaped bent pipe 422, and is configured to physically protect the second heat sink 410 from external impact and to fundamentally prevent the coolant from flowing into the battery pack even in the case in which the coolant leaks from the second heat sink 410 by various causes, thereby preventing occurrence of a secondary event.

Meanwhile, the lower protection cover body 421 may be provided at the edge thereof with at least one first fastening portion 421', which is fixed to a second fastening portion of an upper protection cover body, a description of which will follow.

The upper protection cover 430 includes an upper protection cover body 431 and at least one second fastening portion 431'. That is, the upper protection cover 430 is located in the state in which the second heat sink 410 is seated on the upper protection cover body 431, whereby it is possible to more securely protect the second heat sink 410.

The coupling band 440 is configured to couple the lower protection cover body 421 and the upper protection cover body 431 to each other. As an example, the coupling band 440 may be formed along an edge joint at which the lower protection cover body 421 and the upper protection cover body 431 join each other by cold metal transfer (CMT) welding.

Of course, the lower protection cover body 421 and the upper protection cover body 431 may be joined to each other after being fastened to each other by bolting through the first fastening portion 421' and the second fastening portion 431', or only cold metal transfer (CMT) welding may be performed in the state in which the first fastening portion 421' and the second fastening portion 431' are omitted.

Meanwhile, it is preferable for each of the second heat sink 410, the lower protection cover 420, and the upper protection cover 430 to be made of a material that exhibits high thermal conductivity, such as aluminum.

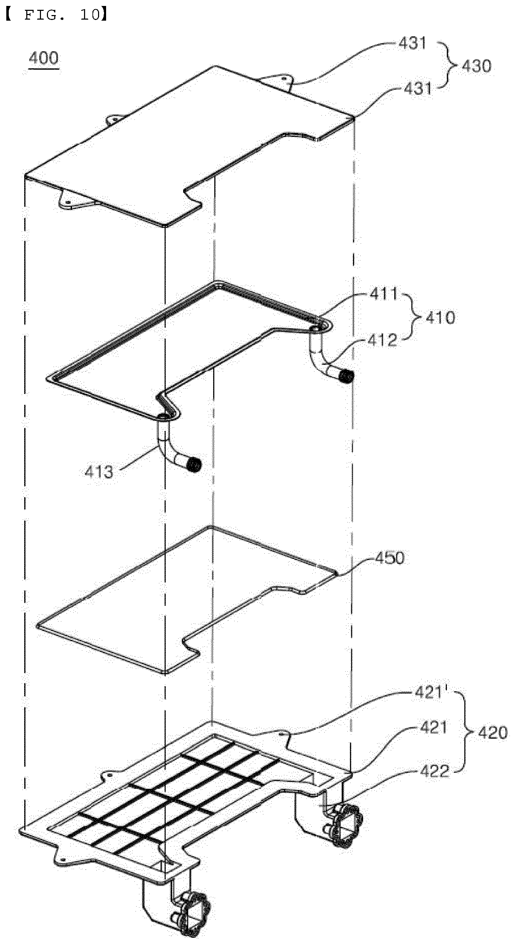

FIG. 10 is an exploded perspective view of a second cooling unit of a second preferred embodiment not according to the present invention.

Referring to FIG. 10, the second cooling unit 400 according to the second embodiment is identical to the second cooling unit 400 according to the first embodiment except that a sealing gasket 450 is provided instead of the coupling band 440.

When describing the sealing gasket 450 of the second cooling unit 400 according to the second embodiment, the sealing gasket 450 may be formed along the edge between the lower protection cover body 421 and the upper protection cover body 431, whereby it is possible to securely prevent coolant leakage from the second cooling unit 400 even in the case in which the second heat sink 410 is damaged. As an example, the sealing gasket may be made of a heat-resistant rubber material; however, the material for the sealing gasket is not particularly restricted as long as the sealing gasket is capable of performing the same function.

Although not shown in the figure, a groove (not shown) configured to receive the sealing gasket 450 may be further formed in at least one of the lower protection cover body 421 and the upper protection cover body 431.

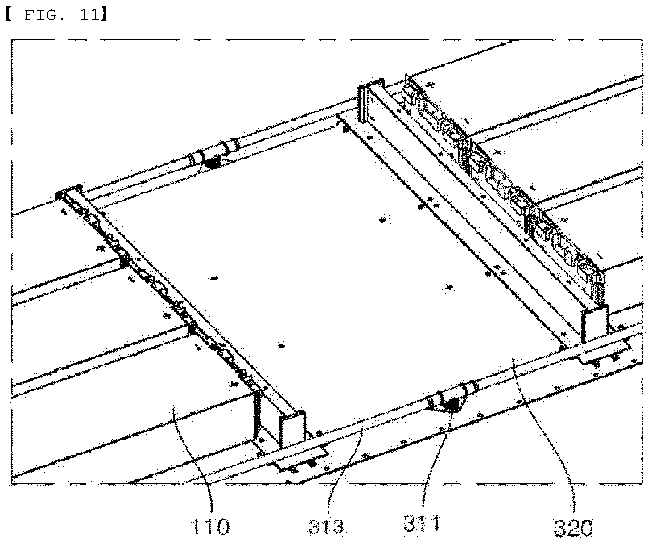

FIG. 11 is a partial perspective view illustrating a battery pack according to a third preferred embodiment not according to the present invention.

Referring to FIG. 11, the battery pack may further include a coolant circulation pipe 313.

In the embodiment described with reference to FIGS. 2 to 10, a coolant is circulated along the coolant circulation channel 231 of the side frame 230, whereas the coolant circulation pipe 313 is further provided in the second embodiment.

That is, the coolant transfer pipe 213 and the coolant circulation pipe 313 are connected to each other such that a coolant introduced into or discharged from the coolant transfer pipe 213 passes though the coolant circulation pipe 313, and the coolant circulation pipe 313 is disposed in the coolant circulation channel 231 of the side frame 230.

Since the coolant circulation pipe 313 is located in the coolant circulation channel 231, as described above, it is possible to securely prevent leakage of the coolant, thus inhibiting occurrence of an event, even in the case in which the side case 230 is damaged due to external impact.

The present invention provides a device as defined in claim 8. The device may be an electronic device including a large-capacity battery, such as an electric vehicle, a hybrid electric vehicle, or a plug-in hybrid electric vehicle.

The invention is defined by the appended claims.

### (Description of Reference Numerals)

100: Battery module
110: First battery module
120: Second battery module
200: Pack case
210: Front frame
211: Coolant introduction port 212: Coolant discharge port
213: Coolant transfer pipe
220: Rear frame
230: Side frame
231: Coolant circulation channel
232: Air circulation channel
233: Incision portion
234: Fastening hole
300: First cooling unit
310: First heat sink
310': First lower plate
310": First upper plate
311: First coolant inlet 312: First coolant outlet
313: Coolant circulation pipe
320: First heat dissipation plate
330: Second heat dissipation plate
400: Second cooling unit
410: Second heat sink
411: Second heat sink body 412: Second coolant inlet
413: Second coolant outlet
420: Lower protection cover
421: Lower protection cover body
421': First fastening portion
422: Bent pipe
430: Upper protection cover
431: Upper protection cover body
431': Second fastening portion
440: Coupling band
450: Sealing gasket

## Claims

1. A battery pack comprising battery modules (100) stacked in multiple stages, the battery pack comprising:
at least one battery module (100); and
a pack case (200) configured to receive the battery module (100) therein, wherein
the battery module (100) comprises a first battery module (110) and a second battery module (120) vertically stacked above the first battery module (110),
wherein a first cooling unit (300) configured to discharge heat generated from the first battery module (110) is located between an inside upper surface of a bottom surface of the pack case (200) and the first battery module (110), and
wherein a second cooling unit (400) configured to discharge heat generated from the second battery module (120) is provided between the first battery module (110) and the second battery module (120),
wherein the pack case (200) comprises a front frame (210), a rear frame (220), and a pair of side frames (230) configured to connect the front frame (210) and the rear frame (220) to each other, and
wherein each of the pair of side frames (230) is provided with a refrigerant circulation channel (231) configured to supply and collect a refrigerant to and from the first cooling unit (300), and
wherein the second cooling unit (400) comprises:
a second heat sink (410);
a lower protection cover (420) located under the second heat sink (410);
an upper protection cover (430) located on the second heat sink (410); and
a coupling band (440) located along edges of the lower protection cover (420) and the upper protection cover (430) in a state of receiving the second heat sink (410).

2. The battery pack according to claim 1, wherein the front frame (210) is provided with a pair of a refrigerant introduction port (211) and a refrigerant discharge port (212) spaced apart from each other by a predetermined distance, and
wherein a refrigerant transfer pipe (213) configured to communicate with the refrigerant circulation channel (231) is connected to each of the refrigerant introduction port (211) and the refrigerant discharge port (212).

3. The battery pack according to claim 2, wherein each of the pair of side frames (230) is provided an air circulation channel (232) located adjacent the refrigerant circulation channel of the side frame so as to be parallel to the refrigerant circulation channel.

4. The battery pack according to claim 3, wherein the air circulation channel (232) is provided with at least one incision portion (233) configured to allow external air to pass therethrough.

5. The battery pack according to claim 3, wherein the first cooling unit (300) comprises:
a pair of a first lower plate (310') and a first upper plate (310") configured to provide a space in which a refrigerant is circulated; and
a first heat sink (310) comprising a first refrigerant inlet (311) and a first refrigerant outlet (312) detachably coupled to the refrigerant circulation channel (231), and
wherein a bottom surface of the side frame (230) is provided with fastening holes (234) connected to the first refrigerant inlet (311) and the first refrigerant outlet (312).

6. The battery pack according to claim 1, wherein the coupling band (440) is formed by CMT welding.

7. The battery pack according to claim 1, wherein the second heat sink (410) comprises:
a second heat sink body (411);
a second L-shaped refrigerant inlet (412) configured to supply a second refrigerant to the second heat sink body (411); and
a second L-shaped refrigerant outlet (413) configured to discharge the second refrigerant,
wherein the lower protection cover (420) is provided with a pair of bent pipes (422) configured to receive the second refrigerant inlet (412) and the second refrigerant outlet (413), respectively.

8. A device comprising the battery pack according to any one of claims 1 to 8.

## Patentansprüche

1. Batteriepack, umfassend Batteriemodule (100), welche in mehreren Stufen gestapelt sind, wobei der Batteriepack umfasst:
wenigstens ein Batteriemodul (100); und
ein Packgehäuse (200), welches dazu eingerichtet ist, das Batteriemodul (100) darin aufzunehmen, wobei
das Batteriemodul (100) ein erstes Batteriemodul (110) und ein zweites Batteriemodul (120) umfasst, welches vertikal über dem ersten Batteriemodul (110) gestapelt ist,
wobei eine erste Kühleinheit (300), welche dazu eingerichtet ist, Wärme abzuführen, welche von dem ersten Batteriemodul (110) erzeugt wird, zwischen einer inneren oberen Fläche einer Bodenfläche des Packgehäuses (200) und dem ersten Batteriemodul (110) angeordnet ist, und
wobei eine zweite Kühleinheit (400), welche dazu eingerichtet ist, Wärme abzuführen, welche von dem zweiten Batteriemodul (120) erzeugt wird, zwischen dem ersten Batteriemodul (110) und dem zweiten Batteriemodul (120) bereitgestellt ist,
wobei das Packgehäuse (200) einen vorderen Rahmen (210), einen hinteren Rahmen (220), und ein Paar von Seitenrahmen (230) umfasst, welche dazu eingerichtet sind, den vorderen Rahmen (210) und den hinteren Rahmen (220) miteinander zu verbinden, und
wobei jeder aus dem Paar von Seitenrahmen (230) mit einem Kühlmittel-Zirkulationskanal (231) bereitgestellt ist, welcher dazu eingerichtet ist, ein Kühlmittel zu der ersten Kühleinheit (300) zuzuführen und von dieser zu sammeln, und
wobei die zweite Kühleinheit (400) umfasst:
eine zweite Wärmefalle (410);
eine untere Schutzabdeckung (420), welche unter der zweiten Wärmefalle (410) angeordnet ist;
eine obere Schutzabdeckung (430), welche an der zweiten Wärmefalle (410) angeordnet ist; und
ein Kopplungsband (440), welches entlang Rändern der unteren Schutzabdeckung (420) und der oberen Schutzabdeckung (430) in einem Zustand eines Aufnehmens der zweiten Wärmefalle (410) angeordnet ist.

2. Batteriepack nach Anspruch 1, wobei der vordere Rahmen (210) mit einem Paar aus einem Kühlmittel-Einführanschluss (211) und einem Kühlmittel-Abführanschluss (212) bereitgestellt ist, welche voneinander um einen vorbestimmten Abstand beabstandet sind, und
wobei ein Kühlmittel-Übertragungsrohr (213), welches dazu eingerichtet ist, mit dem Kühlmittel-Zirkulationskanal (231) zu kommunizieren, mit jedem aus dem Kühlmittel-Einführanschluss (211) und dem Kühlmittel-Abführanschluss (212) verbunden ist.

3. Batteriepack nach Anspruch 2, wobei jeder aus dem Paar von Seitenrahmen (230) mit einem Luft-Zirkulationskanal (232) bereitgestellt ist, welcher benachbart zu dem Kühlmittel-Zirkulationskanal des Seitenrahmens angeordnet ist, um parallel zu dem Kühlmittel-Zirkulationskanal zu sein.

4. Batteriepack nach Anspruch 3, wobei der Luft-Zirkulationskanal (232) mit wenigstens einem Einschnittabschnitt (233) bereitgestellt ist, welcher dazu eingerichtet ist, es externer Luft zu ermöglichen, dadurch zu strömen.

5. Batteriepack nach Anspruch 3, wobei die erste Kühleinheit (300) umfasst:
ein Paar aus einer ersten unteren Platte (310') und einer ersten oberen Platte (310"), welche dazu eingerichtet sind, einen Raum bereitzustellen, in welchem ein Kühlmittel zirkuliert; und
eine erste Wärmefalle (310), welche einen ersten Kühlmitteleinlass (311) und einen ersten Kühlmittelauslass (312) umfasst, welche entfernbar mit dem Kühlmittel-Zirkulationskanal (231) gekoppelt sind, und
wobei eine Bodenfläche des Seitenrahmens (230) mit Befestigungslöchern (234) bereitgestellt ist, welche mit dem ersten Kühlmitteleinlass (311) und dem ersten Kühlmittelauslass (312) verbunden sind.

6. Batteriepack nach Anspruch 1, wobei das Kopplungsband (440) durch CMT-Schweißen gebildet ist.

7. Batteriepack nach Anspruch 1, wobei die zweite Wärmefalle (410) umfasst:
einen zweiten Wärmefallenkörper (411);
einen zweiten L-förmigen Kühlmitteleinlass (412), welcher dazu eingerichtet ist, dem zweiten Wärmefallenkörper (411) ein zweites Kühlmittel zuzuführen; und
einen zweiten L-förmigen Kühlmittelauslass (413), welcher dazu eingerichtet ist, das zweite Kühlmittel abzuführen,
wobei die untere Schutzabdeckung (420) mit einem Paar gebogener Rohre (422) bereitgestellt ist, welche dazu eingerichtet sind, den zweiten Kühlmitteleinlass (412) bzw. den zweiten Kühlmittelauslass (413) aufzunehmen.

8. Vorrichtung, umfassend den Batteriepack nach einem der Ansprüche 1 bis 8.

## Revendications

1. Bloc-batterie comprenant des modules de batterie (100) empilés en de multiples étages, le bloc-batterie comprenant :
au moins un module de batterie (100) ; et
un boîtier de bloc (200) configuré pour y recevoir le module de batterie (100), dans lequel
le module de batterie (100) comprend un premier module de batterie (110) et un deuxième module de batterie (120) empilé verticalement au-dessus du premier module de batterie (110),
dans lequel une première unité de refroidissement (300) configurée pour évacuer la chaleur générée par le premier module de batterie (110) est située entre une surface supérieure intérieure d'une surface de fond du boîtier de bloc (200) et le premier module de batterie (110), et
dans lequel une deuxième unité de refroidissement (400) configurée pour évacuer la chaleur générée par le deuxième module de batterie (120) est disposée entre le premier module de batterie (110) et le deuxième module de batterie (120),
dans lequel le boîtier de bloc (200) comprend un cadre avant (210), un cadre arrière (220) et une paire de cadres latéraux (230) configurés pour raccorder le cadre avant (210) et le cadre arrière (220) entre eux, et
dans lequel chacun de la paire de cadres latéraux (230) est doté d'un canal de circulation de réfrigérant (231) configuré pour fournir et collecter un réfrigérant vers et depuis la première unité de refroidissement (300), et
dans lequel la deuxième unité de refroidissement (400) comprend :
un deuxième dissipateur thermique (410) ;
un couvercle de protection inférieur (420) situé sous le deuxième dissipateur thermique (410) ;
un couvercle de protection supérieur (430) situé sur le deuxième dissipateur thermique (410) ; et
une bande de couplage (440) située le long des bords du couvercle de protection inférieur (420) et du couvercle de protection supérieur (430) dans un état de réception du deuxième dissipateur thermique (410).

2. Bloc-batterie selon la revendication 1, dans lequel le cadre avant (210) est doté d'une paire d'un orifice d'introduction de réfrigérant (211) et d'un orifice d'évacuation de réfrigérant (212) espacés l'un de l'autre d'une distance prédéterminée, et
dans lequel un tuyau de transfert de réfrigérant (213) configuré pour communiquer avec le canal de circulation de réfrigérant (231) est raccordé à chacun de l'orifice d'introduction de réfrigérant (211) et de l'orifice d'évacuation de réfrigérant (212).

3. Bloc-batterie selon la revendication 2, dans lequel chacun de la paire de cadres latéraux (230) est doté d'un canal de circulation d'air (232) situé de manière adjacente au canal de circulation de réfrigérant du cadre latéral de façon à être parallèle au canal de circulation de réfrigérant.

4. Bloc-batterie selon la revendication 3, dans lequel le canal de circulation d'air (232) est doté d'au moins une partie d'incision (233) configurée pour permettre le passage de l'air externe à travers celui-ci.

5. Bloc-batterie selon la revendication 3, dans lequel la première unité de refroidissement (300) comprend :
une paire d'une première plaque inférieure (310') et d'une première plaque supérieure (310") configurée pour fournir un espace dans lequel circule un réfrigérant ; et
un premier dissipateur thermique (310) comprenant une première entrée de réfrigérant (311) et une première sortie de réfrigérant (312) couplées de manière détachable au canal de circulation de réfrigérant (231), et
dans lequel une surface de fond du cadre latéral (230) est dotée de trous de fixation (234) raccordés à la première entrée de réfrigérant (311) et à la première sortie de réfrigérant (312).

6. Bloc-batterie selon la revendication 1, dans lequel la bande de couplage (440) est formée par soudage CMT.

7. Bloc-batterie selon la revendication 1, dans lequel le deuxième dissipateur thermique (410) comprend :
un deuxième corps de dissipateur thermique (411) ;
une deuxième entrée de réfrigérant en forme de L (412) configurée pour fournir un deuxième réfrigérant au deuxième corps de dissipateur thermique (411) ; et
une deuxième sortie de réfrigérant en forme de L (413) configurée pour évacuer le deuxième réfrigérant,
dans lequel le couvercle de protection inférieur (420) est doté d'une paire de tuyaux coudés (422) configurés pour recevoir respectivement la deuxième entrée de réfrigérant (412) et la deuxième sortie de réfrigérant (413).

8. Dispositif comprenant le bloc-batterie selon l'une quelconque des revendications 1 à 8.
